# EUROPÄISCHE PATENTSCHRIFT

(11) **EP 4 115 433 B1**
(45) Veröffentlichungstag und Bekanntmachung des Hinweises auf die Patenterteilung: **11.09.2024**
(21) Anmeldenummer: 21709920.9
(22) Anmeldetag: 02.03.2021
(51) Int. Cl.: H01F 7/08, H01F 7/127, H01F 3/00, H01F 41/02, F16F 9/32

(54) **HERSTELLUNGSVERFAHREN EINES POLKERNS, POLKERN, ELEKTROMAGNETISCHER AKTOR SOWIE SCHWINGUNGSDÄMPFER**
METHOD FOR PRODUCING A POLE CORE, POLE CORE, ELECTROMAGNETIC ACTUATOR AND VIBRATION DAMPER
PROCÉDÉ DE FABRICATION D'UN NOYAU POLAIRE, NOYAU POLAIRE, ACTIONNEUR ÉLECTROMAGNÉTIQUE ET AMORTISSEUR DE VIBRATIONS

(30) Priorität: 05.03.2020 DE 102020106013
(43) Veröffentlichungstag der Anmeldung: 11.01.2023
(73) Patentinhaber: Kendrion (Villingen) GmbH, 78048 Villingen-Schwenningen (DE)
(72) Erfinder: BUCHTA, Ales, 79812 Kralice na Hané (CZ)
(74) Vertreter: Westphal, Mussgnug & Partner Patentanwälte mbB
(86) Internationale Anmeldenummer: PCT/EP2021/055113
(87) Internationale Veröffentlichungsnummer: WO 2021/175811

(56) Entgegenhaltungen:
- CN-C- 100 434 739
- DE-A1- 4 310 719
- JP-A- 2017 227 268
- JP-A- S5 828 021
- US-A1- 2006 144 666

## Beschreibung

Die vorliegende Erfindung betrifft ein Herstellungsverfahren eines Polkerns mit den Merkmalen des Patentanspruchs 1, einen Polkern mit den Merkmalen des Patentanspruchs 10 sowie einen elektromagnetischen Aktor mit einem Polkern mit den Merkmalen des Patentanspruchs 11 sowie ein Schwingungsdämpfer mit einem solchen elektromagnetischen Aktor mit den Merkmalen des Patentanspruchs 12.

Polkerne sind aus dem Stand der Technik in unterschiedlichen Ausgestaltungen vorbekannt und werden aus einem magnetischen Werkstoff, insbesondere ferromagnetischem Metall, hergestellt. Derartige Polkerne werden verbreitet in elektromagnetischen Aktoren zum Führen eines magnetischen Flusses verwendet, die beispielsweise in Dämpferventilen zur Steuerung der Dämpfercharakteristik eines Schwingungsdämpfers zur Abwendung kommen. Dämpferventile weisen zwischen einem Zulauf und einem Ablauf eine Austrittsöffnung auf, die mehr oder weniger verschlossen werden kann. Durch das Öffnen oder Verschließen wird die Austrittsöffnung gedrosselt und damit das Dämpfungsverhalten eines Schwingungsdämpfers eingestellt. Soll das Fahrzeug ein "hartes" Fahrwerk erhalten, wird die Drosselwirkung erhöht bzw. die Austrittsöffnung mehr geschlossen, währenddessen bei einem "weichen" Fahrwerk die Austrittsöffnung weiter geöffnet wird. Das Öffnen und Schließen des Dämpferventils erfolgt durch ein elektromagnetisches Aktorsystem, welches bei einer entsprechenden Bestromung einer Erregerspule einen Ventilkörper zustellt.

Dämpferventile sollten "Fall-Safe" ausgebildet sein, damit beispielsweise beim Versagen des elektromagnetischen Aktors ein sicheres Betreiben des Kraftfahrzeugs mit einem solchen Schwingungsdämpfer möglich ist.

In dem Stand der Technik wurden hierzu verschiedene Bauarten von Polkernen vorgeschlagen, wobei der Polkern einerseits ein flussführendes Bauteil ist und andererseits Bestandteile des elektromagnetischen Aktors vom Medium in dem Schwingungsdämpfer abdichtet. Diese Abdichtung ist notwendig um zu verhindern, dass keine Verunreinigungen in die Bestandteile des elektromagnetischen Aktors eindringen können und möglicherweise die Funktion des elektromagnetischen Aktors bzw. des Schwingungsdämpfers stören.

Weiteren Stand der Technik bilden die Druckschriften DE 43 10 719 A1 und US 2006 144 666 A1, aus denen ein Herstellungsverfahren für einen Polkern vorbekannt ist.

In der Vergangenheit wurde hierzu ein Polkern mit einem Flansch vorgeschlagen, der durch eine Unterbrechung in einen ersten Abschnitt und einen zweiten Abschnitt unterteilt ist. In der Unterbrechung ist ein nicht-magnetischer Einsetzling angeordnet, der den ersten Abschnitt mit dem zweiten Abschnitt verbindet. Der Einsetzling ist typischerweise durch Hartlöten stoffschlüssig sowohl mit dem ersten Abschnitt als auch mit dem zweiten Abschnitt verbunden und dichtet die Unterbrechung ab. Ein derart ausgestalteter Polkern ist gas- und flüssigkeitsdicht und hat sich in der Vergangenheit bewährt. Allerdings hat sich gezeigt, dass die stoffschlüssige Verbindung zwischen dem ersten Abschnitt, dem Einsetzling und dem zweiten Abschnitt aufgrund von Eigenspannungen und unterschiedlichen Wärmeausdehnungskoeffizienten Verschleiß unterliegt und die Dichtigkeit der Unterbrechung nicht dauerhaft gewährleistet ist, was zu einem frühzeitigen Versagen des elektromagnetischen Aktors bzw. des Dämpferventils als auch möglicherweise des Schwingungsdämpfers führt.

Hier setzt die vorliegende Erfindung an.

Die vorliegende Erfindung stellt sich der Aufgabe, ein verbessertes Herstellungsverfahren für einen Polkern, einen Polkern, einen verbesserten elektromagnetischen Aktor sowie einen verbesserten Schwingungsdämpfer vorzuschlagen, der die aus dem Stand der Technik bekannten Nachteile in zweckmäßiger Weise beseitigt und die Herstellung eines langzeitstabilen Polkerns unter Berücksichtigung wirtschaftlicher Aspekte ermöglicht. Diese Aufgaben werden durch ein Herstellungsverfahren für einen Polkern mit den Merkmalen des Patentanspruchs 1, einen Polkern mit den Merkmalen des Patentanspruchs 10, ein elektromagnetischer Aktor mit den Merkmalen des Patentanspruchs 11 und einen Schwingungsdämpfer mit den Merkmalen des Patentanspruchs 12 gelöst.

Weitere vorteilhafte Ausgestaltungen der vorliegenden Erfindung werden in den Unteransprüchen angegeben.

Das erfindungsgemäße Herstellungsverfahren für einen Polkern mit den Merkmalen des Patentanspruchs 1 weist folgende Verfahrensschritte auf:
- Bereitstellen eines magnetischen Werkstücks mit einer ersten Seite und einer zweiten Seite, wobei die erste Seite eine zu der zweiten Seite gerichtete Nut aufweist,
- Einsetzten von mindestens zwei Einsetzlingen sowie mindestens eines Verbindungsmittels in die Nut, wobei das mindestens eine Verbindungsmittel zwischen zwei Einsetzlingen angeordnet ist, und
- stoffschlüssiges Verbinden der mindestens zwei Einsetzlinge miteinander und/oder der mindestens zwei Einsetzlinge mit dem Werkstück durch bevorzugtes Aufschmelzen des Verbindungsmittels.

Das erfindungsgemäße Herstellungsverfahren für einen Polkern beruht auf der Erkenntnis, dass beim Aufschmelzen des Verbindungsmittels Kapillarkräfte das aufgeschmolzene Verbindungsmittel auf den Kontaktflächen zwischen dem Werkstück und den Einsetzlingen verteilen und die Kontaktflächen vollständig benetzt werden, wodurch eine intermetallische Verbindung zwischen den Einsetzlingen und dem Werkstück bewerkstelligt wird. Durch die mindestens zwei in die Nut eingesetzten Einsetzlinge werden Materialspannungen durch die Verteilung der Kraftvektoren teilweise ausgeglichen und es kann ein Polkern mit einer geschlossenen und stoffschlüssigen Verbindung bereitgestellt werden, der die aus dem Stand der Technik bekannten Probleme beseitigt. Als wesentlich hat sich auch erwiesen, dass die Fließwege des aufgeschmolzenen Verbindungsmittels reduziert werden.

Hier und im Nachfolgenden ist im Zusammenhang mit dieser Erfindung unter einem magnetischen Werkstück ein Werkstück zu verstehen, welches aus einem weichmagnetischem Werkstoff hergestellt ist, der sich in einem Magnetfeld leicht magnetisieren lässt. Ein solcher Werkstoff ist zum Beispiel ein Kohlenstoffstahl, Eisen oder sogenanntes Weicheisen, Stahl mit Siliziumzusatz, eine Nickel-Eisen-Legierung, eine Nickel-KobaltLegierung o.Ä.

Weiterhin sieht eine bevorzugte Weiterbildung des Herstellungsverfahrens vor, dass die mindestens zwei Einsetzlinge aus einem nicht-magnetischen Werkstoff, insbesondere aus Edelstahl oder rostfreiem Stahl, hergestellt sind.

Auch hat es sich bei der Durchführung des Herstellungsverfahrens von Vorteil gezeigt, dass das mindestens eine Verbindungsmittel mindestens einen vereinzelten Kupferkörper umfasst, der in die Nut eingesetzt wird. Kupfer eignet sich zum Herstellen einer als geschlossene Lötverbindung ausgebildeten stoffschlüssigen Verbindung hervorragend und weist aufgrund seiner Materialeigenschaften eine hohe Elastizität auf, wodurch Spannungen aufgrund unterschiedlicher Wärmeausdehnungen der Einsetzlinge und des Werkstücks ausgeglichen werden können. Weiterhin weist Kupfer im geschmolzenen Zustand eine geringe Viskosität auf, weshalb die Schmelze des Verbindungsmittels aufgrund von Kapillarkräften die Einsetzlinge in der Nut vollständig benetzt und nach dem Abkühlen eine belastbare hartgelötete und stoffschlüssige Verbindung ermöglicht. Der mindestens eine vereinzelte Kupferkörper kann bevorzugt ein an die Form der Nut angepasster Kupferkörper sein. Beispielsweise kann der Kupferkörper ein Kupferdraht, ein Formteil oder Schüttgut sein. Der Kupferkörper kann weiterhin aus einer Kupferlegierung gebildet sein. Alternativ kann an Stelle von Kupfer als Verbindungsmittel ein anderes nicht-magnetisches Verbindungsmittel verwendet werden, welches Silber, Messing o.Ä. beinhaltet und zum Hartlöten geeignet ist. Hartlöten erfolgt definitionsgemäß in einem Temperaturbereich von über 723 K.

Eine Weiterbildung des Herstellungsverfahrens sieht vor, dass die Nut durch ein spanendes Fertigungsverfahren in die erste Seite des Werkstücks eingearbeitet wird, wobei bevorzugt die Nut in die erste Seite als ringförmige Nut mit einem U-förmigen Querschnitt, aufweisend eine Innenseite, eine Bodenseite und eine Außenseite, ausgebildet wird. Der jeweilige Einsetzling ist im Querschnitt quaderförmig und kann an die Form der Nut angepasst sein. Der Einsetzling weist eine erste Fläche und eine zweite Fläche auf. In dem Fall, dass die Nut eine ringförmige Nut ist, kann der jeweilige Einsetzling ebenfalls ringförmig ausgebildet sein, wobei die erste Fläche einer inneren Mantelfläche und die zweite Fläche einer äußeren Mantelfläche entspricht.

Gemäß einer weiteren bevorzugten Ausführung des Herstellungsverfahrens ist die erste Fläche und/oder die zweite Fläche mindestens einer der zwei Einsetzlinge als Übergangspassung ausgebildet, weshalb der betreffende Einsetzling in die Nut mit einer moderaten Presskraft eingepresst werden kann. Es kann dabei vorteilhaft sein, wenn der Einsetzling lediglich an der ersten Seite oder der zweiten Seite eine Übergangspassung aufweist, währenddessen auf der anderen Seite eine Spielpassung vorgesehen sein kann, womit der unterschiedlichen Wärmeausdehnung der verwendeten Materialien für das Werkstück und die Einsetzlinge Rechnung getragen wird. Beim Erreichen der erforderlichen Temperatur schmilzt das Verbindungsmittels auf und kann sowohl auf der ersten Seite als auch auf der zweiten Seite einen näherungsweise gleich groß bemessene Kapillarspalten fließen. Aufgrund von Kapillarkräften fließt die Schmelz und wird in dem verteilt.

Nach Maßgabe einer weiteren vorteilhaften Ausführung des vorliegenden Herstellungsverfahrens ist das Werkstück beim stoffschlüssigen Verbinden derart positioniert, dass mindestens einer der Einsetzlinge schwerkraftbedingt in die Nut gedrückt wird. Sobald das Verbindungsmittel beim Erreichen der Schmelztemperatur verflüssigt ist, kann mindestens einer der Einsetzlinge schwerkraftbedingt auf das verflüssigte Verbindungsmittel eine Druckkraft aufbringen und das verflüssigte Verbindungsmittel zwischen den mindestens zwei Einsetzlingen verdrängen, um so das Verteilen des aufgeschmolzenen Verbindungsmittels auf den Kontaktflächen in den Kapillarspalten zu begünstigen. Dabei sinkt der entsprechende Einsetzling ab und zwar vorzugsweise so weit, bis die mindestens zwei Einsetzlinge in der Nut - abgesehen von einer dünnen Schicht des aufgeschmolzenen Verbindungsmittels - auf Stoß liegen. Beim Abkühlen des Werkstücks härtet das Verbindungsmittel aus und bildet eine geschlossene stoffschlüssige Verbindung sowohl zwischen dem Werkstück und den Einsetzlingen als auch vorzugsweise zwischen den mindestens zwei Einsetzlingen.

Gemäß einer bevorzugten Weiterbildung des Herstellungsverfahrens erfolgt das Erhitzen des Werkstücks und das Verflüssigen des Verbindungsmittels so lange, bis das Verbindungsmittel durch kapillaren Transport in der Nut zwischen den Einsetzlingen näherungsweise vollständig verdrängt ist und die beiden Einsetzlinge in der Nut auf Stoß liegen. Überflüssige Schmelze des Verbindungsmittels kann entweder aus der Nut austreten oder sich in einer Ausnehmung in der Bodenseite absetzen. Durch eine näherungsweise konstante Dicke des Verbindungsmittels nach dem Abkühlen sowohl in den Kapillarspalten als auch zwischen den Einsetzlingen wird verhindert, dass Lunker oder Hohlräume ausgebildet sind, welche einerseits die Dichtigkeit der stoffschlüssigen Verbindung beeinträchtigen könnten und andererseits Eigenspannungen begünstigen.

Eine Weiterbildung des Herstellungsverfahrens sieht vor, dass nach dem Abkühlen des Werkstücks auf der ersten Seite und/oder auf der zweiten Seite Material abgetragen wird. Insbesondere ist es bevorzugt, wenn nach dem Abkühlen des Werkstücks die erste Seite und/oder die zweite Seite durch ein spanendes Fertigungsverfahren, beispielsweise Drehen, Fräsen oder Schleifen, überarbeitet werden bzw. wird.

Vorzugsweise wird auf der zweiten Seite zumindest bereichsweise Material abgetragen, um auf der zweiten Seite eine Stirnseite eines der mindestens zwei Einsetzlinge - oder die Bodenseite der Nut - freizulegen, wodurch das magnetische Werkstück in einen ersten Abschnitt und einen zweiten Abschnitt unterteilt wird. Die Nut bildet nach dem zumindest teilweisen Abtragen der zweiten Seite und dem Freilegen mindestens eines der Einsetzlinge eine Unterbrechung zwischen dem ersten Abschnitt und dem zweiten Abschnitt, wobei der erste Abschnitt und der zweite Abschnitt in der Unterbrechung mittels der mindestens zwei Einsetzlinge und dem Verbindungsmittel stoffschlüssig verbunden sind.

Ein weiterer Aspekt der vorliegenden Erfindung betrifft einen Polkern, hergestellt mit dem erfindungsgemäßen Herstellungsverfahren. Der Polkern ist vorzugsweise durch eine Unterbrechung in mindestens zwei Abschnitte unterteilt, wobei in der Unterbrechung mindestens zwei nicht-magnetische Einsetzlinge angeordnet sind, über die die mindestens zwei Abschnitte mit einer stoffschlüssigen Verbindung verbunden sein können.

Weiterhin ist es bevorzugt, wenn die mindestens zwei nicht-magnetischen Einsetzlinge aus einem rostfreien Stahl oder Edelstahl hergestellt sind und mittels einer hartgelöteten stoffschlüssigen Verbindung verbunden sind, wobei Kupfer als Verbindungsmittel dienen kann. Die Unterbrechung ist durch die Einsetzlinge und die stoffschlüssige Verbindung gas- und flüssigkeitsdicht verschlossen, wodurch kein Stofftransport durch die Unterbrechung von der ersten Seite zu der zweiten Seite oder vice versa erfolgen kann.

Ein weiterer Aspekt der vorliegenden Erfindung betrifft einen elektromagnetischen Aktor mit einem solchen Polkern.

Ein dritter Aspekt der vorliegenden Erfindung betrifft einen Schwingungsdämpfer mit einem solchen elektromagnetischen Aktor.

Ein vierter und letzter Aspekt der vorliegenden Erfindung betrifft ein Kraftfahrzeug mit wenigstens einem solchen Schwingungsdämpfer.

Nachfolgend wird unter Bezugnahme auf die begleitenden Zeichnungen ein Ausführungsbeispiel eines erfindungsgemäßen Polkerns im Detail beschrieben. Es zeigen:
- Figur 1: eine Schnittdarstellung eines Werkstücks mit einer Nut, in die zwei Einsetzlinge eingepresst sind und die mittels einer hartgelöteten stoffschlüssigen Verbindung in der Nut mit dem Werkstück verbunden sind, und
- Figur 2: eine schematische Darstellung des Herstellungsverfahrens eines Polkerns.

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

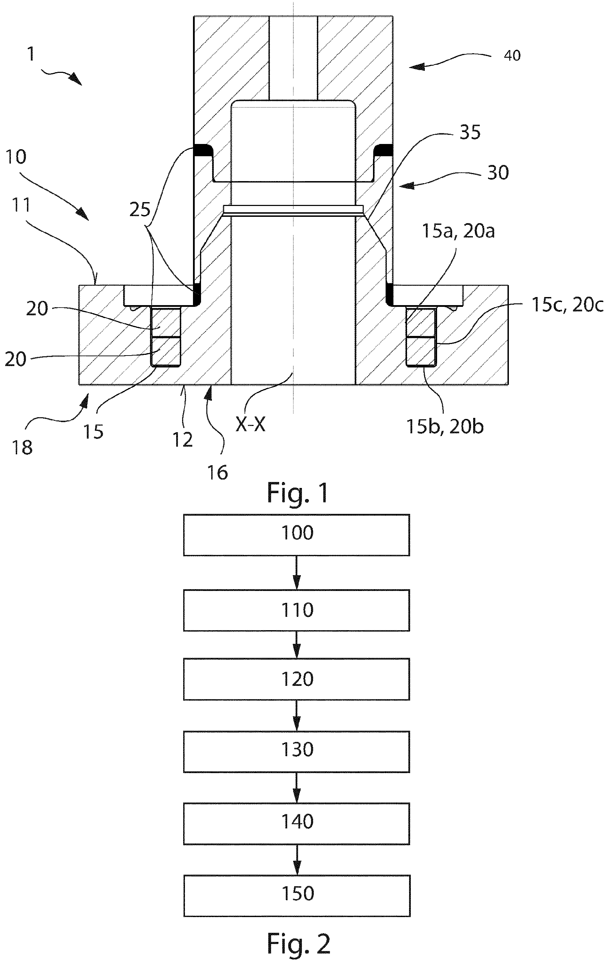

Figur 1 zeigt ein Werkstück 10, dass näherungsweise um eine Längsachse X-X rotationssymmetrisch ausgebildet ist. Das Werkstück 10 weist einen Hülsenabschnitt und einen Flanschabschnitt auf, wobei der Flansch senkrecht von der Längsachse X-X vom Hülsenabschnitt absteht.

Der Flanschabschnitt weist eine erste Seite 11 und eine zweite Seite 12 auf, die in der Längsachse X-X beabstandet auf gegenüberliegenden Seiten des Flanschabschnitts angeordnet sind.

In dem Flanschabschnitt ist von der ersten Seite 11 eine im Querschnitt U-förmige Nut 15 angeordnet, die ringförmig um die Längsachse X-X, vorzugweise um diese rotationssymmetrisch, angeordnet ist und in Richtung der zweiten Seite gerichtet ist. Die Nut 15 weist eine Innenseite 15a, eine Bodenseite 15b und eine Außenseite 15c auf, wobei die Innenseite 15a und die Außenseite 15c parallel zu der Längsachse X-X angeordnet sind. Die Bodenabseite 15b kann in Richtung der zweiten Seite 12 gewölbt sein und kann eine Kegel- oder Kugelsenkung aufweisen.

Weiterhin ist aus der Figur 1 ersichtlich, dass in die Nut 15 zwei Einsetzlinge 20 eingesteckt oder eingepresst sind. Der jeweilige Einsetzling 20 ist aus einem nicht-magnetischen Werkstoff, beispielsweise rostfreiem Stahl, hergestellt. Der jeweilige Einsetzling 20 ist ringförmig mit zwei Stirnseiten 20b, einer durch eine innere Mantelfläche gebildeten ersten Fläche 20a und einer durch eine äußere Mantelfläche gebildeten zweiten Fläche 20c, ausgebildet.

Der jeweilige Einsetzling 20 kann koaxial zu der Längsachse X-X in die Nut 15 eingesetzt werden, wobei die erste Fläche 20a und die zweite Fläche 20c des Einsetzlings 20 an die Innenseite 15a und die Außenseite 15c angepasst sind. Die Innenseite 15a der Nut 15 und die erste Fläche 20a des jeweiligen Einsetzlings 20 können als Übergangspassung ausgebildet sein und deren Maße innerhalb eines Toleranzbands von ± 0,05mm, weiter bevorzugt ± 0,025mm und besonders weiter bevorzugt von ±0,015mm, liegen. Die Außenseite 15c der Nut 15 und die zweite Fläche 20c des jeweiligen Einsetzlings 20 können ebenfalls als Übergangspassung ausgebildet sein und deren Maße innerhalb eines Toleranzbands von ± 0,025mm, weiter bevorzugt von 10,015mm, liegen.

Figur 1 zeigt, dass ein weiterer Polkernabschnitt 40 aus einem magnetischen Werkstoff mit dem Werkstück 10 verbunden sein kann. Der Polkernabschnitt 40 ist über eine nicht-magnetische Hülse 30, vorzugsweise aus Edelstahl, mit dem Werkstück 10 verbunden, wobei die nicht-magnetische Hülse 30 ebenfalls mittels dem Verbindungsmittel 25 durch eine hartgelötete stoffschlüssige Verbindung verbunden sein kann. Bevorzugt kann das Werkstück 10 auf der der Hülse 30 zugewandten Seite eine kegelförmig ausgebildete Fase 35 aufweisen.

In der Nut 15 sind die zwei Einsetzlinge 20 mit dem Werkstück stoffschlüssig verbunden, wobei die stoffschlüssige Verbindung durch ein Hartlöten mit einem Verbindungsmittel 25 bei Temperaturen über 723 K erfolgt, welches gemäß einer bevorzugten Ausführung des im späteren noch detailliert beschriebenen Herstellungsverfahren Kupfer beinhaltet.

Hierzu wird zunächst das Werkstück 10 aus einem magnetischen Werkstoff mit der ersten Seite 11 und der zweiten Seite 12 in einem Verfahrensschritt 100 gemäß Figur 2 bereitgestellt.

Anschließend wird im Verfahrensschritt 120 in das Werkstück 10 auf der ersten Seite 11 die Nut 15 - bevorzugt durch Drehen oder Fräsen - eingearbeitet.

In einem folgenden Verfahrensschritt 130 werden mindestens zwei Einsetzlinge 20 und das Verbindungsmittel 25 in die Nut 15 eingesetzt, wobei zwischen die zwei Einsetzlinge 20 das Verbindungsmittel 25, bevorzugt als mindestens ein vereinzelter Körper, angeordnet ist. In diesem Zustand kann der zuletzt in die Nut 15 eingesetzte oder eingepresste Einsetzling 20 aus der Nut 15 bereichsweise herausragen.

In einem folgenden Verfahrensschritt 140 wird die in Verfahrensschritt 130 gebildete Anordnung zum stoffschlüssigen Verbinden der Einsetzlinge 20 mit dem Werkstück 10 sowie der Einsetzlinge 20 miteinander erhitzt, bis das Verbindungsmittel aufschmilzt.

Für den Fall, das Kupfer als Verbindungsmittel 25 verwendet wird, wird die Anordnung mindestens auf die Schmelztemperatur von Kupfer erhitzt, welche bei ca. 1358K liegt. Das Kupfer verflüssigt sich, und fließt aufgrund von Kapillarkräften um die Einsetzlinge 20 in der Nut 15, insbesondere in Kapillarspalten zwischen die Innenseite 15a und die erste Seite 20a als auch zwischen die Außenseite 15c und die zweite Seite 20c.

Beim Erhitzen der in Verfahrensschritt 130 gebildeten Anordnung ist es vorteilhaft, wenn das Werkstück 10 derart angeordnet ist, dass die Nut 15 in der Vertikalrichtung so angeordnet ist, dass die Einsetzlinge 20 durch die Schwerkraft in die Nut 15 gedrückt werden. Entsprechend ist das in der Figur 1 gezeigte Werkstück 10 so anzuordnen, dass die Längsachse X-X in der Vertikalen ausgerichtet ist, und die Nut 15 in Bezug auf die Erdoberfläche nach oben zeigt.

Die Anordnung aus dem Verfahrensschritt 130 wird so lange auf eine Temperatur oberhalb der Schmelztemperatur des Verbindungsmittels 25 erhitzt, bis das Verbindungsmittel 25 zwischen den beiden Einsetzlingen 20 vollständig aufgeschmolzen ist und die beiden Einsetzlinge 20 bis auf eine verbleibende Filmschicht von Verbindungsmittel 25 auf Stoß liegen. Auch kann eine Presskraft die beiden Einsetzlinge 20 im erhitzten Zustand der Anordnung in die Nut 15 pressen.

Nach dem Abkühlen können sowohl die erste Seite 11 als auch zweite Seite 12 mechanisch überarbeitet werden. Um den erfindungsgemäßen Polkern 1 zu bilden, wind in Verfahrensschritt 150 auf der zweiten Seite 12 Material abgetragen, um die Nut 15 bzw. den in der Nut 15 zuerst eingesetzten Einsetzling 20 freizulegen und das Werkstück in zwei Bereiche 16, 18 zu teilen. Das Freilegen des Einsetzlings 20 erfolgt bevorzugt durch Fräsen oder Drehen, wodurch das Werkstück 10 in die zwei Abschnitte 16, 18 durch eine durch die Nut 15 und die in die Nut 15 stoffschlüssig angeordneten Einsetzlinge 20 ausgefüllte Unterbrechnung getrennt wird. Die beiden Abschnitte 16, 18 werden ausschließlich durch nicht-magnetische Werkstoff verbunden, nämlich den zwei Einsetzlingen 20 und dem Verbindungsmittel 25.

### Bezugszeichenliste

- 1: Polkern
- 10: Werkstück
- 11: erste Seite
- 12: zweite Seite
- 15: Nut
- 15a: Innenseite
- 15b: Bodenseite
- 15c: Außenseite
- 16: Abschnitte

- 18: Abschnitt
- 20: Einsetzling
- 20a: erste Fläche von 20
- 20b: Stirnseite von 20
- 20c: zweite Fläche von 20
- 21: erste Fläche
- 22: zweite Fläche
- 25: Verbindungsmittel
- 30: Hülse
- 35: Fase
- 40: Polkernabschnitt

- X-X: Längsachse

## Patentansprüche

1. Herstellungsverfahren eines Polkerns (1), aufweisend folgende Verfahrensschritte:
- Bereitstellen eines magnetischen Werkstücks (10) mit einer ersten Seite (11) und einer zweiten Seite (12), wobei die erste Seite (11) eine zur zweiten Seite (12) gerichtete Nut (15) aufweist,
- Einsetzten von mindestens zwei Einsetzlingen (20) sowie mindestens eines Verbindungsmittels (25) in die Nut (15), wobei das mindestens eine Verbindungsmittel (25) zwischen den zwei Einsetzlingen (20) angeordnet ist, und
- stoffschlüssiges Verbinden der mindestens zwei Einsetzlinge (20) miteinander und optional der mindestens zwei Einsetzlinge (20) mit dem Werkstück (10).

2. Verfahren nach Anspruch 1,
**gekennzeichnet dadurch, dass**
das stoffschlüssiges Verbinden der mindestens zwei Einsetzlinge (20) miteinander und/oder der mindestens zwei Einsetzlinge (20) mit dem Werkstück (10) durch ein Erhitzen des Werkstücks und ein Verflüssigen des Verbindungsmittels (25) erfolgt.

3. Verfahren nach Anspruch 1 oder 2,
**gekennzeichnet dadurch, dass**
die mindestens zwei Einsetzlinge (20) aus einem nicht-magnetischen Werkstoff, insbesondere aus Edelstahl, sind.

4. Verfahren nach einem der Ansprüche 1 bis 3,
**gekennzeichnet dadurch, dass**
das Verbindungsmittel (25) mindestens einen vereinzelten Kupferkörper umfasst, der in die Nut (15) eingesetzt wird.

5. Verfahren nach einem der vorgenannten Ansprüche,
**gekennzeichnet dadurch, dass**
mindestens einer der zwei Einsetzlinge (20) auf einer ersten Fläche (21) und/oder auf einer zweiten Fläche (22) eine Übergangspassung (23) aufweist, die an die Nut (15) angepasst ist.

6. Verfahren nach einem der vorgenannten Ansprüche,
**gekennzeichnet dadurch, dass**
mindestens einer der zwei Einsetzlinge (20) durch Einpressen in die Nut (15) einsetzt wird.

7. Verfahren nach einem der vorgenannten Ansprüche,
**gekennzeichnet dadurch, dass**
das Werkstück (10) beim stoffschlüssigen Verbinden derart positioniert ist, dass mindestens einer der zwei Einsetzlinge (20) schwerkraftbedingt in die Nut (15) gedrückt wird.

8. Verfahren nach einem der vorgenannten Ansprüche,
**gekennzeichnet dadurch, dass**
das Erhitzen des Werkstücks und Verflüssigen des Verbindungsmittels (25) solange erfolgt, bis das Verbindungsmittel durch kapillaren Transport in der Nut (15) zwischen den Einsetzlingen (20) zerflossen ist und die mindestens zwei Einsetzlinge (20) näherungsweise in der Nut (15) auf Stoß liegen.

9. Verfahren nach einem der vorgenannten Ansprüche,
**gekennzeichnet dadurch, dass**
die zweite Seite zum Freilegen des mindestens einen der zwei Einsetzlinge (20) abgetragen wird, vorzugsweise durch ein spanendes Fertigungsverfahren.

10. Polkern (1) mit einer Nut (15), die den Polkern (1) in mindestens zwei Abschnitte (16, 18) unterteilt, wobei in der Nut (15) mindestens zwei nicht-magnetischen Einsetzlinge (20) angeordnet sind, über die die mindestens zwei Abschnitte (16, 18) miteinander verbunden sind, und die untereinander mit einem Verbindungsmittel stoffschlüssig verbunden sind.

11. Elektromagnetischer Aktor mit einem Polkern (1) nach Anspruch 10.

12. Schwingungsdämpfer für ein Fahrzeug mit einem elektromagnetischen Aktor nach Anspruch 11.

13. Fahrzeug mit einem Schwingungsdämpfer nach Anspruch 12.

## Claims

1. Manufacturing method for a pole core (1), comprising the following method steps:
- providing a magnetic workpiece (10), having a first side (11) and a second side (12), wherein the first side (11) comprises a groove (15) oriented toward the second side (12),
- inserting at least one insertion (20), as well as at least one attaching agent (25) into the groove (15), wherein the at least one attaching agent (25) is arranged between the two insertions (20), and
- integrally connecting the at least two insertions (20) to each other and, optionally, the at least two insertions (20) to the workpiece (10).

2. Method in accordance with claim 1,
**characterized in that**
the integral connecting of the at least two insertions (20) to each other and/or of the at least two insertions (20) to the workpiece (10) is carried out by heating the workpiece and liquefying the attaching agent (25).

3. Method in accordance with claim 1 or 2,
**characterized in that**
the at least two insertions (20) are made of a non-magnetic material, in particular stainless steel.

4. Method in accordance with any of claims 1 to 3,
**characterized in that**
the attaching agent (25) comprises at least one isolated copper body which is inserted into the groove (15).

5. Method in accordance with any of the preceding claims,
**characterized in that**
the at least two insertions (20) comprise, on a first surface (21) and/or on a second surface (22) a transition fit (23), which is adapted to the groove (15).

6. Method in accordance with any of the preceding claims,
**characterized in that**
at least one of the two insertions (20) is inserted into the groove (15) by means of press fitting.

7. Method in accordance with any of the preceding claims,
**characterized in that**
the workpiece (10) is positioned during the integral connecting such that at least one of the two insertions (20) is pressed into the groove (15) by the force of gravity.

8. Method in accordance with any of the preceding claims,
**characterized in that**
the heating of the workpiece and the liquefying of the attaching agent (25) are continued until the attaching agent (25) in the groove (15) between the insertions (20) is melted away via capillary transport and the at least two insertions (20) lie approximately end-to-end in the groove (15).

9. Method in accordance with any of the preceding claims,
**characterized in that**
the second side is removed in order to expose at least one of the at least two insertions (20), preferably by means of a machining procedure.

10. Pole core (1), having a groove (15) which divides the pole core (1) into at least two sections (16, 18), wherein at least two non-magnetic insertions (20) are arranged in the groove (15), via which the at least two sections (16, 18) are connected to each other, and which are integrally connected to each other by means of an attaching agent (25).

11. Electromagnetic actuator having a pole core (1) in accordance with claim 10.

12. Shock absorber for a motor vehicle having an electromagnetic actuator in accordance with claim 11.

13. Motor vehicle having a shock absorber in accordance with claim 12.

## Revendications

1. Procédé de fabrication d'un noyau polaire (1) comprenant les étapes suivantes consistant à :
- fournir une pièce magnétique (10) ayant un premier côté (11) et un second côté (12), le premier côté (11) ayant une rainure (15) orientée vers le second côté (12),
- engager au moins deux inserts (20) et au moins un moyen de liaison (25) dans la rainure (15), ce moyen de liaison (25) étant entre les deux inserts (20), et
- relier par une liaison par la matière au moins les deux inserts (20) entre eux et en option au moins les deux inserts (20) avec la pièce (10).

2. Procédé selon la revendication 1,
**caractérisé en ce que**
la liaison par la matière au moins des deux inserts (20) entre eux et/ou au moins des deux inserts (20) à la pièce (10) se fait par le chauffage de la pièce et un moyen de liaison fluidifié (25).

3. Procédé selon la revendication 1 ou 2,
**caractérisé en ce que**
les deux inserts (20) sont en une matière non magnétique notamment en acier inoxydable.

4. Procédé selon l'une des revendications 1 à 3,
**caractérisé en ce que**
le moyen de liaison (25) comprend au moins un corps séparé, en cuivre, que l'on place dans la rainure (15).

5. Procédé selon l'une des revendications précédentes,
**caractérisé en ce que**
au moins l'un des deux inserts (20) a un ajustement de transition (23) sur une première surface (21) et/ou une seconde surface (22) et qui est adapté à la rainure (15).

6. Procédé selon l'une des revendications précédentes,
**caractérisé en ce que**
au moins l'un des deux inserts (20) est engagé à la presse dans la rainure (15).

7. Procédé selon l'une des revendications précédentes,
**caractérisé en ce que**
la pièce (10) est positionnée pour une liaison par la matière de façon qu'au moins l'un des inserts (20) s'enfonce par la pesanteur dans la rainure (15).

8. Procédé selon l'une des revendications précédentes,
**caractérisé en ce que**
le chauffage de la pièce et la fluidification de l'agent de liaison (25) se font jusqu'à ce que le moyen de liaison ait coulé par effet capillaire dans la rainure (15) entre les inserts (20) et qu'au moins les deux inserts (20) soient placés approximativement sur chant dans la rainure (15).

9. Procédé selon l'une des revendications précédentes,
**caractérisé en ce que**
on réduit le second côté pour dégager au moins l'un des inserts (20), de préférence par un usinage par enlèvement de copeaux.

10. Noyau polaire (1) comportant une rainure (15) qui subdivise les noyaux polaires (1) en au moins deux segments (16, 18),
* au moins deux inserts (20) non magnétiques étant installés dans la rainure (15), par lesquels au moins les deux segments (16, 18) sont reliés l'un à l'autre par une liaison par la forme par un moyen de liaison.

11. Actionneur électromagnétique comportant un noyau polaire (1) selon la revendication 10.

12. Amortisseur de véhicule comportant un actionneur électromagnétique selon la revendication 11.

13. Véhicule équipe d'un amortisseur selon la revendication 12.
